# EUROPÄISCHE PATENTSCHRIFT

(11) **EP 1 779 967 B1**
(45) Veröffentlichungstag und Bekanntmachung des Hinweises auf die Patenterteilung: **01.10.2008**
(21) Anmeldenummer: 06021685.0
(22) Anmeldetag: 17.10.2006
(51) Int. Cl.: B23Q 1/26, B24B 13/00, B24B 41/00

(54) **Gestaltung der Schlittenführung einer Fast-tool-anordnung, insbesondere für Drehmaschinen zur Bearbeitung von optischen Werkstücken**
Slide design for a rapidly reciprocating tool carrier, especially for an optical workpiece lathe
Réalisation d'une glissière du chariot d'un outil rapide, en particulier pour un tour de pièces optiques

(30) Priorität: 01.11.2005 DE 102005052314
(43) Veröffentlichungstag der Anmeldung: 02.05.2007
(73) Patentinhaber: Satisloh GmbH, 35578 Wetzlar (DE)
(72) Erfinder: Savoie, Marc, 35578 Wetzlar (DE)
(74) Vertreter: Oppermann, Mark

(56) Entgegenhaltungen:
- EP-A- 1 386 694
- EP-A1- 1 495 839
- EP-A2- 0 849 038

## Beschreibung

Die Erfindung bezieht sich auf eine Fast-Tool-Anordnung, insbesondere für Drehmaschinen zur Bearbeitung von optischen Werkstücken, gemäß dem Oberbegriff des Patentanspruchs 1. Insbesondere ist die Fast-Tool-Anordnung für die Bearbeitung von Kunststoff-Brillengläsern vorgesehen.

Eine Fast-Tool-Anordnung ist eine zusätzliche Maschinenkomponente für eine hochdynamische Bewegung des Werkzeugs in Zustellrichtung beim Drehvorgang. Insbesondere für die Anwendung in Ultra-Präzisionsmaschinen können mit einer derartigen Fast-Tool-Anordnung nicht-rotationssymmetrische Formen wie Freiformflächen, torische Flächen, atorische Flächen und ähnliche Flächen durch Drehverfahren erzeugt werden. Es sind rotative und lineare Fast-Tool-Systeme bekannt. Die vorliegende Erfindung bezieht sich auf ein lineares System.

### STAND DER TECHNIK

Derartige Fast-Tool-Anordnungen entsprechend dem Oberbegriff des Patentanspruchs 1 sind beispielsweise aus der WO 02/06005 A1 und aus der EP-A-1 495 839 bekannt. Bei dem Ausführungsbeispiel gemäß Fig. 7 dieser Veröffentlichung erfolgt die Führung und Lagerung des Schlittens (auch "shuttle" genannt) an flachen Luftlagerelementen. Luftlagerelemente sind wegen ihrer hervorragenden Eigenschaften für derartige Anordnungen besonders geeignet. An ihnen tritt praktisch keine Reibung und kein Verschleiß auf, weil die Lagerung und Führung berührungslos erfolgt. Luftlagerelemente sind im Betrieb geräuschlos und vibrationsfrei. Hohe Bewegungsgeschwindigkeiten und hohe Beschleunigungen/ Verzögerungen wie sie bei Fast-Tool-Anordnungen vorliegen, werden ermöglicht. Luftlager benötigen auch keine Schmierung.

Bei der aus der WO 02/06005 A1 bekannten Fast-Tool-Anordnung sind beiderseits eines Schlittens nur zwei Luftlagerelemente vorhanden, die einen erheblichen Abstand zueinander aufweisen, so daß die vom Tauchspulenantrieb unvermeidbar erzeugte Wärme zu erheblichen und der Arbeitsgenauigkeit abträglichen Abmessungsänderungen des zwischen den Luftlagerelementen angeordneten metallischen Schlittens infolge Wärmeausdehnung führt. Um dabei ein Klemmen des Schlittens an den Luftlagerelementen zu vermeiden, ist ein größerer Luftspalt erforderlich, der jedoch die Steifigkeit des Systems herabsetzt.

### DARSTELLUNG DER ERFINDUNG

Ausgehend vom Stand der Technik nach der WO 02/06005 A1 liegt der Erfindung die Aufgabe zugrunde, eine Fast-Tool-Anordnung der eingangs angegebenen Ausbildung und Anwendung bereitzustellen, bei welcher Schlittenerwärmungen nur zu sehr geringen Abmessungsänderungen führen, so daß hohe Anforderungen an die Genauigkeit und Qualität der erzeugten optischen Flächen erfüllbar sind, und welche eine hochgenaue lineare Führung und Lagerung des Schlittens auch bei großen Hubwegen und eine geringe Masse des Schlittens ermöglicht.

Die gestellte Aufgabe wird erfindungsgemäß durch die im Patentanspruch 1 angegebenen Merkmale gelöst. Vorteilhafte und/oder zweckmäßige Weiterbildungen der Erfindung sind in den Unteransprüchen angegeben und nachfolgend ebenfalls näher erläutert.

Erfindungsgemäß ist bei einer Fast-Tool-Anordnung entsprechend dem Oberbegriff des Patentanspruchs 1 vorgesehen, daß der Schlitten den Querschnitt eines T-Profils mit planparallelen Flansch- und Stegflächen besitzt, wobei die Lagerelemente paarweise an beiden Seiten des Profilsteges und des Profilflansches angeordnet sind.

Durch diese konstruktive Ausbildung des Schlittens als T-Profil wird bei kleinen kompakten Abmessungen des daher nur eine geringe Masse aufweisenden Schlittens eine hohe Steifigkeit des Schlittens erzielt. Durch die planparallelen Flansch- und Stegflächen können diese Flächen in voller Breite und Länge für die Lagerung und Führung des Schlittens an den Lagerelementen herangezogen werden. Aufgrund des T-förmigen Profils des Schlittens können die Lagerelement-Paare, nämlich ein Paar am Profilsteg und zwei Paare am Profilflansch, insgesamt also sechs Lagerelemente, in gedrängter Anordnung vorgesehen werden. Da die Lagerelemente jeden Paares zwischen sich lediglich die Materialdicke des Steges bzw. des Flansches einschließen, wirken sich Wärmeausdehnungen auf die Abmessungen des Schlittens und damit auf die Führungsgenauigkeit des Schlittens an den Lagerelementen nur äußerst geringfügig aus.

Im Verfolg des Erfindungsgedankens besitzt das Gehäuse für die Lagerung und Führung des Schlittens entsprechend Anspruch 2 eine den Abmessungen des Schlittens und der Lagerelemente angepaßte T-förmige Ausnehmung. Vorzugsweise ist das Gehäuse wie im Anspruch 3 angegeben zweiteilig ausgebildet.

Der Schlitten ist vorzugsweise gemäß Anspruch 4 aus zwei planparallelen Platten zusammengesetzt, die durch Schrauben verbunden sind (Anspruch 5). Der Schlitten und das Gehäuse sind aus geometrisch einfachen rechtwinkligen Bestandteilen aufgebaut, was eine genaue und dennoch preisgünstige Fertigung ermöglicht.

Der aufgrund seiner Bauweise ohnehin kompakte und damit leichte Schlitten kann entsprechend Anspruch 6 eine weitere vorteilhafte Gewichtsreduzierung durch Anbringung von Längsbohrungen im Profilsteg und Querbohrungen im Profilflansch erfahren. Bei plattenförmigem verschraubten Aufbau ist es dabei gemäß Anspruch 7 zweckmäßig, die Schrauben neben den Querbohrungen in der den Profilflansch bildenden Platte durch diese zu führen.

Dem Schlitten und dem Tauchspulenantrieb ist jeweils ein angepaßtes Gehäuse zugeordnet. Diese beiden Gehäuse sind vorzugsweise unter Bildung eines Spalts wie im Anspruch 8 angegeben aneinander angeschlossen, wodurch durch die schnellen Bewegungen des Tauchspulenantriebs erzeugte Schwingungen nicht unmittelbar auf die Fast-Tool-Anordnung übertragen werden, sondern über die Masse des Maschinengestells absorbiert werden, mit dem beide Gehäuse jeweils durch Schrauben fest verbunden sind.

Zur Kühlung der äußeren Mantelfläche des Permanentmagneten des Tauchspulantriebs mit Luft oder einer Kühlflüssigkeit ist zweckmäßig die im Anspruch 9 angegebene Anordnung vorgesehen. Aber in weiterer Ausbildung der Erfindung ist gemäß Anspruch 10 auch für die Tauchspule eine Luftkühlung vorgesehen, wobei zweckmäßig die Kühlluft zusammen mit der Abluft der als Luftlagerelemente ausgebildeten Lagerelemente und der von der Tauchspule verdrängten Luft durch den Eintauchringraum der Tauchspule hindurch nach außen geführt ist.

Für eine Unterbindung eines ungehinderten Wärmeflusses von dem Tauchspulenantrieb zu der Fast-Tool-Anordnung ist es von Vorteil, wenn entsprechend Anspruch 11 der Schlitten mit der Tauchspule unter Zwischenlage einer Isolatorplatte aus einem thermisch isolierenden, wärme-, form- und maßstabilen Kunststoff verschraubt ist. Die Isolatorplatte weist zweckmäßig Nuten zur Aufnahme der Anschlußkabel der Tauchspule auf, wie aus Anspruch 12 hervorgeht.

Für die Begrenzung der Weglänge des gemeinsamen Weges von Schlitten und Tauchspule sind in beiden Bewegungsrichtungen in weiterer Ausbildung der Erfindung die in den Ansprüchen 13 bis 15 angegebenen Anschlagelemente vorgesehen.

### KURZE BESCHREIBUNG DER ZEICHNUNGEN

Weitere Einzelheiten der Erfindung werden nachfolgend anhand der ein Anwendungsbeispiel für die Fast-Tool-Anordnung und ein Ausführungsbeispiel der Fast-Tool-Anordnung darstellenden Zeichnungen näher erläutert. Darin zeigt:
- Fig. 1: eine perspektivische Ansicht einer mit zwei erfindungsgemäßen Fast-Tool-Anordnungen ausgerüsteten Maschine zur Bearbeitung von optischen Werkstücken, insbesondere Kunststoff-Brillengläsern,
- Fig. 2: eine Seitenansicht einer Fast-Tool-Anordnung mit Tauchspulenantrieb, sowie einem an der Fast-Tool-Anordnung angebrachten Werkzeughalter, der mit einem Drehmeißel bestückt ist,
- Fig. 3: eine Schnittansicht entsprechend der Schnittverlaufslinie III-III in Fig. 2,
- Fig. 4: eine Draufsicht auf die Fast-Tool-Anordnung mit Tauchspulenantrieb gemäß Fig. 2, jedoch ohne Werkzeughalter,
- Fig. 5: eine Längsschnittansicht entsprechend der Schnittverlaufslinie V-V in Fig. 4,
- Fig. 6: einen vergrößerten Ausschnitt entsprechend dem Ausschnittskreis VI in Fig. 5,
- Fig. 7: einen vergrößerten Längsschnitt durch den in Fig. 5 dargestellten Schlitten,
- Fig. 8: eine Stirnansicht des inneren Endes des Schlittens gemäß Fig. 7,
- Fig. 9: eine äußere Stirnansicht der in Fig. 4 dargestellten Fast-Tool-Anordnung und
- Fig. 10: eine äußere Stirnansicht des in Fig. 4 dargestellten Tauchspulenantriebs.

### DETAILLIERTE BESCHREIBUNG DES AUSFÜHRUNGSBEISPIELS

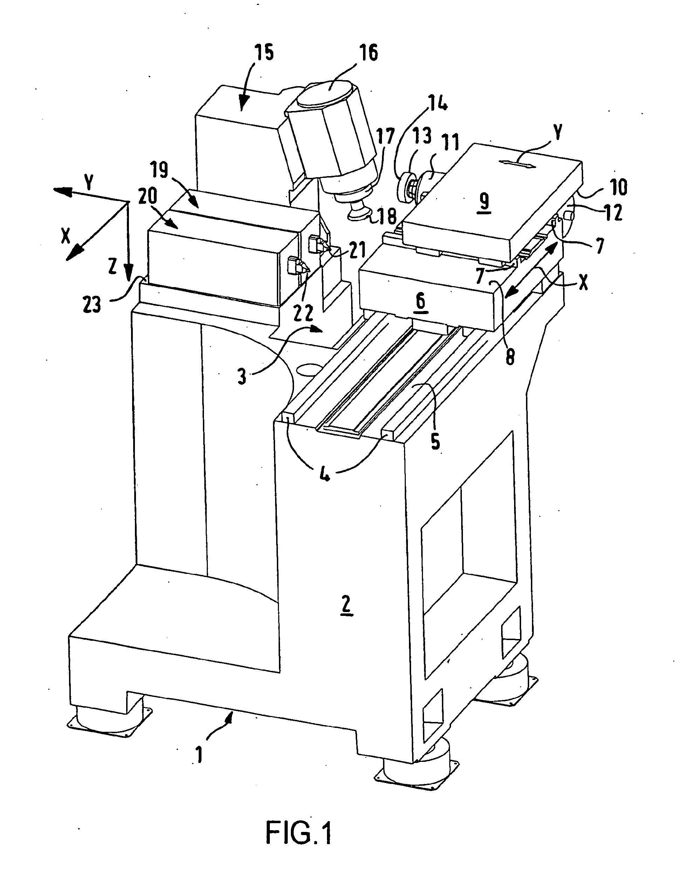

Zunächst wird zur Erläuterung des Anwendungsbeispiels der Fast-Tool-Anordnung auf Fig. 1 Bezug genommen, aus welcher in schematischer Darstellung eine CNC-geregelte Maschine 1 insbesondere zur Flächenbearbeitung von Brillengläsern 13 aus Kunststoff in einem rechtwinkligen kartesischen Koordinatensystem hervorgeht. In dem Koordinatensystem bezeichnen die Buchstaben x, y und z die Breitenrichtung (x) bzw. die Längenrichtung (y) bzw. die Höhenrichtung (z) der Maschine 1 und ihrer Komponenten.

Die Maschine 1 besitzt ein Maschinengestell 2 mit einem Bearbeitungsbereich 3. Auf der in Fig. 1 rechten Seite des Bearbeitungsbereichs 3 sind zwei Führungsschienen 4, die sich in der (horizontalen) Breitenrichtung x parallel zueinander erstrecken, auf einer oberen Montagefläche 5 des Maschinengestells 2 befestigt. Ein x-Schlitten 6, der durch zugeordnete CNC-Antriebs- und Steuerelemente (nicht dargestellt) in beiden Richtungen einer x-Achse CNC-lagegeregelt verstellbar ist, ist verschiebbar an den Führungsschienen 4 gelagert.

Zwei weitere Führungsschienen 7, die sich in der (ebenfalls horizontalen) Längsrichtung y parallel zueinander und senkrecht zu den Führungsschienen 4 erstrecken, sind auf einer oberen Montagefläche 8 des x-Schlittens 6 befestigt. In einer Kreuztischanordnung ist ein y-Schlitten 9 verschiebbar an den Führungsschienen 7 gelagert, der durch zugeordnete CNC-Antriebs- und Steuerelemente (nicht dargestellt) in beiden Richtungen einer Y-Achse CNC-lagegeregelt verstellbar ist.

An einer unteren Montagefläche 10 des y-Schlittens 9 ist eine Werkstückspindel 11 befestigt, die mittels eines Elektromotors 12 in der Drehzahl und dem Drehwinkel CNC-geregelt drehend antreibbar ist. Die Werkstückdrehachse ist mit der y-Achse ausgefluchtet. An dem in den Bearbeitungsbereich 3 hineinragenden Ende der Werkstückspindel 11 ist das auf einem Blockstück aufgeblockte Brillenglas 13 für die Bearbeitung insbesondere der Rezeptfläche 14 des Brillenglases 13 mittels einer Spannzange fixiert, so daß es sich gleichzeitig mit der Werkstückspindel 11 drehen kann.

Auf der in Fig. 1 linken Seite des Bearbeitungsbereichs 3 ist eine Fräseinheit 15 auf dem Maschinengestell 2 montiert. Die Fräseinheit 15 weist eine mittels eines Elektromotors 16 drehzahlgeregelt antreibbare Frässpindel 17 auf, an deren in den Bearbeitungsbereich 3 hineinragenden Ende ein Fräswerkzeug 18 montiert ist. Mittels der Fräseinheit 15 kann an dem Brillenglas 13 ein Fräsbearbeitungsvorgang ausgeführt werden, der - entsprechend der Lehre der EP 0 758 571 A1 - einen Einstech-Arbeitsgang umfaßt, bei dem das um die Fräser-Drehachse drehzahlgeregelt rotierende Fräswerkzeug 18 und das drehwinkelgeregelt um die Werkstückdrehachse drehende Brillenglas 13 in wenigstens einer der beiden Achsrichtungen x und y derart lagegeregelt relativ zueinander bewegt werden, daß die Schneiden des Fräswerkzeugs 18 mindestens im Bereich des Außenrandes des Brillenglases 13 eine ringmuldenförmige Ausnehmung erzeugen, bevor das Fräswerkzeug 18 in einem formgebenden Arbeitsgang entlang eines spiralförmigen Weges durch Regelung der Bewegungsbahn des Brillenglases 13 in den x- und y-Achsen über das Brillenglas 13 von außen nach innen geführt wird, um weiteres Material abzutragen. Wahlfreie, wenn auch bevorzugt mitablaufende Arbeitsgänge bei diesem Fräsbearbeitungsvorgang sind die Randbearbeitung und das Facettieren des Brillenglases 13. Bei der Randbearbeitung wird mittels des rotierenden Fräswerkzeugs 18 eine Bearbeitung des Brillenglasrohlings z. B. auf die durch die Brillengestellform vorgegebene Umfangskontur vorgenommen, während bei dem Facettieren die obere bzw. innere Umfangskante des Brillenglasrohlings mittels des rotierenden Fräswerkzeugs 18 abgeschrägt wird.

Im Anwendungsbeispiel gemäß Fig. 1 sind zwei Fast-Tool-Anordnungen 19 und 20 in Parallelanordnung vorgesehen. Mit den an den Fast-Tool-Anordnungen befestigten Drehmeißeln 21 und 22, die in den Bearbeitungsbereich 3 hineinreichen, kann die durch die Fräseinheit 15 vorbearbeitete Rezeptfläche 14 des Brillenglases 13 drehend nachbearbeitet werden. Bei dieser Drehbearbeitung können Flächenqualitäten erzielt werden, die der mit herkömmlichen Polierverfahren erzielbaren nahekommen. Die Fast-Tool-Anordnungen 19 und 20 sind auf einer Montagefläche 23 des Maschinengestells 2 montiert. Im übrigen ist die Arbeitsweise der in der Fig. 1 gezeigten Maschine, einschließlich der an sich bekannten Arbeitsweise der Fast-Tool-Anordnungen, nicht Gegenstand der vorliegenden Erfindung, so daß insoweit auf nähere Erläuterungen der Arbeitsvorgänge an dieser Stelle verzichtet werden kann. Nachfolgend wird nunmehr die konstruktive Ausbildung der insoweit übereinstimmend ausgeführten Fast-Tool-Anordnungen 19 und 20 am Beispiel der Anordnung 19 näher beschrieben.

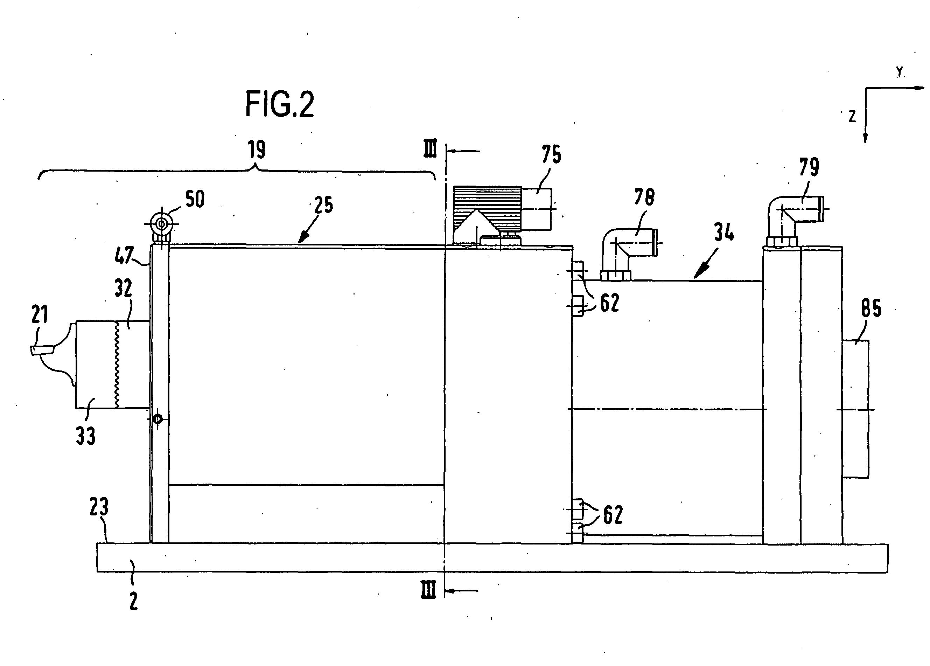

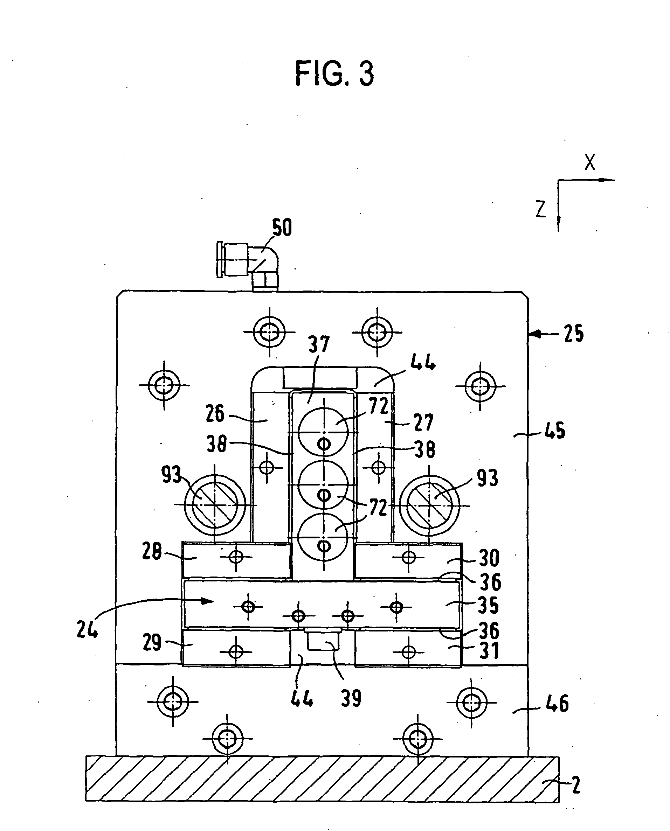

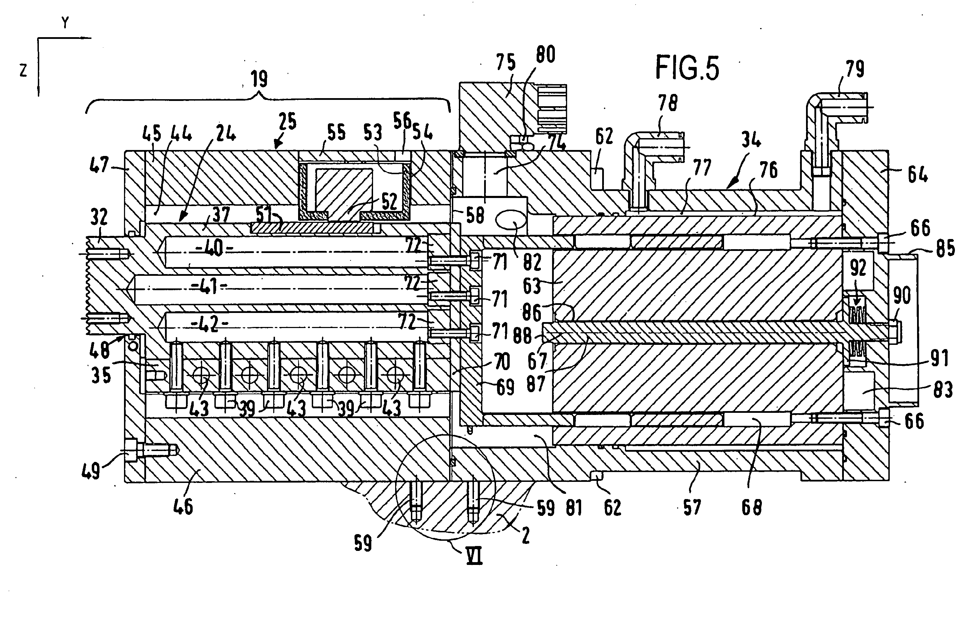

Wie insbesondere aus Fig. 5 ersichtlich ist besitzt die Fast-Tool-Anordnung 19 einen Schlitten 24, welcher den Drehmeißel 21 (Fig. 2) führt. Der Schlitten 24 ist im dargestellten Ausführungsbeispiel für linear reziprozierende Bewegungen in einem Gehäuse 25 an sechs flachen Luftlagerelementen 26 bis 31 geführt, deren Anordnung im Gehäuse 25 aus Fig. 3 ersichtlich ist. Der Schlitten 24 trägt an einem Vorsprung 32 einen damit verschraubten Halter 33 für den Drehmeißel 21. An seinem inneren Ende ist der Schlitten 24 mit einem weiter unten näher beschriebenen Tauchspulenantrieb 34 wirkverbunden.

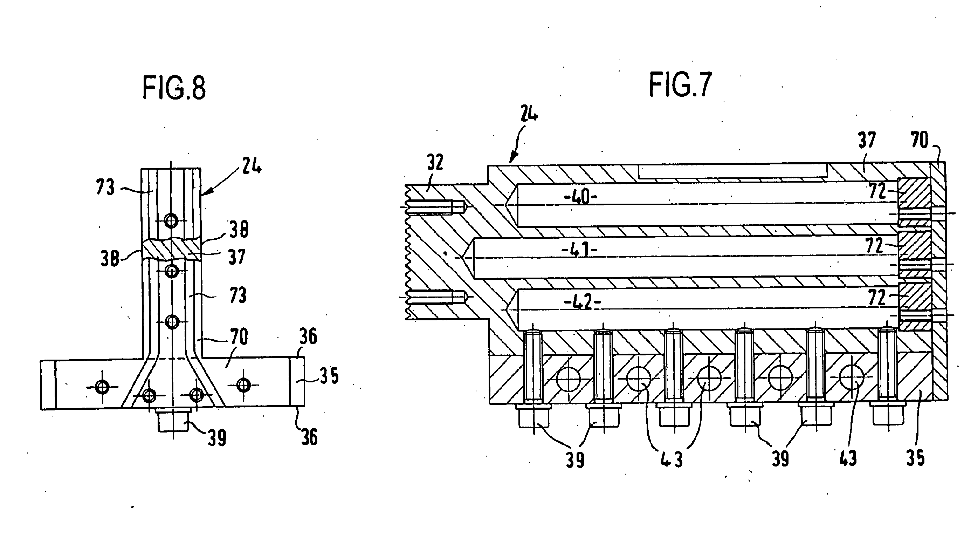

Der Schlitten 24 besitzt den Querschnitt eines T-Profils mit planparallelen Flanschflächen 36 am Profilflansch 35 und planparallelen Stegflächen 38 am Profilsteg 37, wie aus Fig. 8 hervorgeht. Der Schlitten 24 ist aus zwei planparallelen Platten zusammengesetzt, die zueinander senkrecht in T-Form angeordnet sind und den Profilflansch 35 bzw. den Profilsteg 37 bilden. Die beiden Platten bestehen vorzugsweise aus Aluminium und sind durch Schrauben 39 miteinander verbunden, wie die Fig. 3, 5, 7 und 8 verdeutlichen.

Der Aufbau des Schlittens 24 aus zwei Platten ermöglicht eine kostengünstige Fertigung der planparallelen Flanschflächen 36 und der planparallelen Stegflächen 38, welche die Führungsflächen des Schlittens 24 bilden. Dabei können sehr enge Toleranzen in Bezug auf Parallelität und Planität der Flansch- und Stegflächen 36, 38 durch Läppbearbeitung eingehalten werden. Beide Platten können nach der Bearbeitung durch hartanodische Oxidation mit einer harten Verschleißschutzschicht versehen werden, worauf sich noch eine Feinläppbearbeitung anschließen kann, woraus eine Oberfläche resultiert, die bezüglich Ebenheit, Parallelität und Rauhigkeit von optischer Qualität ist. Das auf diese Weise gebildete T-Profil des Schlittens 24 ermöglicht, daß praktisch die gesamten Flansch- und Stegflächen 36, 38 als Lagerflächen zur Verfügung stehen, wodurch eine optimale Tragfähigkeit bzw. eine sehr hohe Steifigkeit der Führung erhalten wird. Diese Steifigkeit ist insbesondere wegen der hohen Prozeßkräfte in x- und y-Richtung von Vorteil, die beim Hochleistungszerspanen von Kunststoff-Brillengläsern auftreten.

Zur Gewichtsminimierung ist die den Profilsteg 37 bildende Platte mit im wesentlichen über ihre Länge durchgehenden zylindrischen Längsbohrungen 40 bis 42 versehen, während die den Profilflansch 35 bildende Platte mit über ihre Breite durchgehenden Querbohrungen 43 versehen ist, wie in den Fig. 5 und 7 veranschaulicht ist. Dabei ist die Anordnung so getroffen, daß die Schrauben 39 jeweils neben bzw. zwischen den Querbohrungen 43 durch den Profilflansch 35 geführt sind.

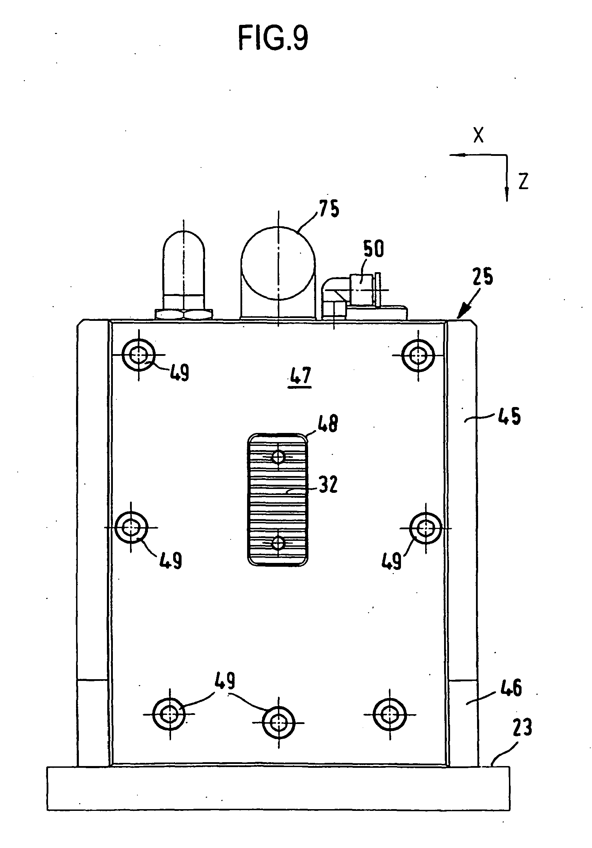

Das Gehäuse 25 weist eine sich über seine Länge erstreckende T-förmige Ausnehmung 44 zur Aufnahme des Schlittens 24 und der Luftlagerelemente 26 bis 31 auf, wie aus Fig. 3 in Verbindung mit Fig. 5 hervorgeht. Das Gehäuse 25 ist aus einem Oberteil 45 und einem Unterteil 46 zusammengesetzt, wobei sich die T-förmige Ausnehmung 44 im Oberteil 45 befindet und das Unterteil 46 plattenförmig ausgebildet ist und die Ausnehmung 44 an der Flanschseite von unten schließt. Die Ausnehmung 44 wird außen durch eine Stirnplatte 47 geschlossen, die mit einer Öffnung 48 für den Durchtritt des Vorsprungs 32 nach außen versehen ist. Die Stirnplatte 47 ist über Schrauben 49 mit dem Oberteil 45 und dem Unterteil 46 des Gehäuses 25 fest verbunden, wie in Fig. 9 in Verbindung mit Fig. 5 gezeigt ist.

Die den Schlitten 24 führenden und lagernden Luftlagerelemente 26 bis 31 sind paarweise an beiden Seiten des Profilstegs 37 bzw. des Profilflansches 35 angeordnet. Das Luftlagerelement-Paar 26/27 ist dem Profilsteg 37 zugeordnet, während die Luftlagerelement-Paare 28/29 und 30/31 dem Profilflansch 35 zugeordnet sind. Als Luftlagerelemente 26 bis 31 werden vorzugsweise poröse Luftlager in flacher rechteckiger Ausführung von New Way Precision/IBS Precision Engineering eingesetzt. Die Luftlagerelemente 26 bis 31 werden direkt in die Ausnehmung 44 des Gehäuses 25 mittels eines Reaktionsharz-Klebstoffes eingeklebt und bedürfen keiner weiteren Justierung. Der pneumatische Anschluß der Luftlagerelemente 26 bis 31 erfolgt über einen Anschlußstutzen 50 an der Stirnplatte 47, in welcher die Luft über entsprechende Kanäle (nicht dargestellt) zu den sechs Luftlagerelementen 26 bis 31 geführt wird. Alternativ zu den vorbeschriebenen flachen Luftlagerelementen können auch strukturierte Lagerelemente verwendet werden, die neben Gasen auch mit Flüssigkeiten als hydrostatische Lager betrieben werden können.

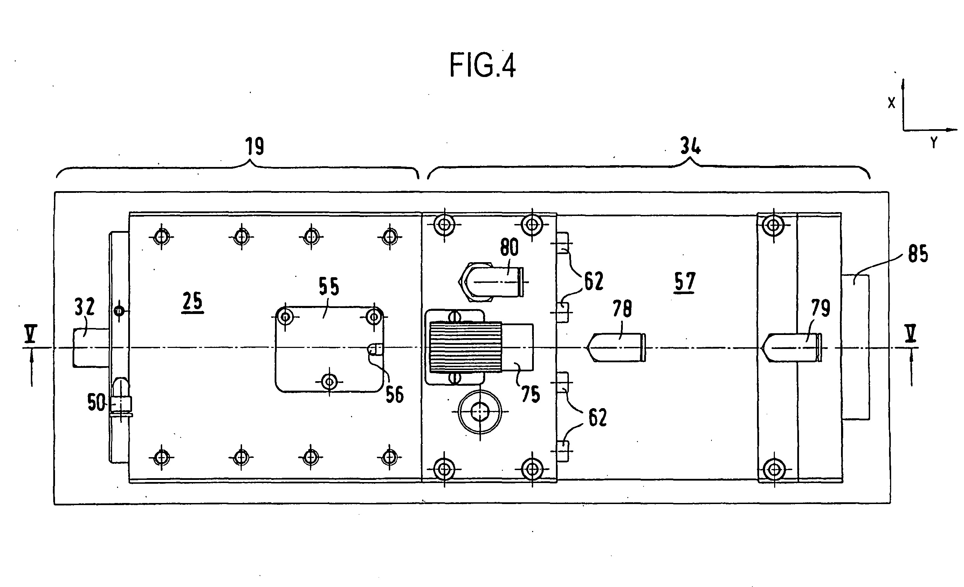

An der oberen Fläche des Schlittens 24 ist ein lineares WegMeßsystem, z.B. ein Glasmaßstab 51, angeordnet, der vorzugsweise in den Profilsteg 37 eingelassen ist. Dem Glasmaßstab 51 ist ein Lesekopf 52 zugeordnet, der relativ zum Glasmaßstab 51 justierbar ist und in einem Lesekopfhalter 53 sitzt, der seinerseits in eine Gehäuseausnehmung 54 eingesetzt ist. Die Gehäuseausnehmung 54 ist durch eine Abdeckung 55 verschließbar, welche eine Öffnung 56 aufweist, durch welche hindurch die Kabel des Lesekopfes 52 nach außen geführt sind. Die Anordnung des Weg-Meßsystems geht aus den Fig. 4 und 5 hervor.

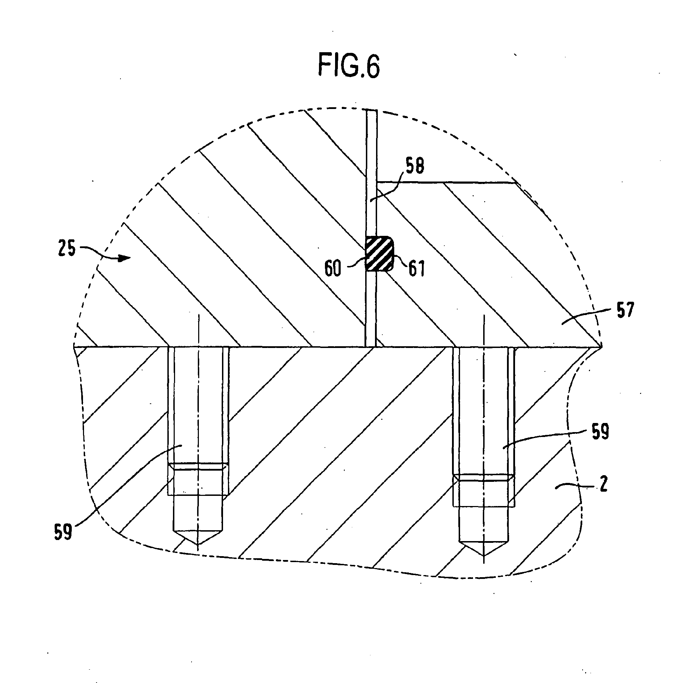

Der Tauchspulenantrieb 34 ist von einem rohrförmigen Antriebsgehäuse 57 umschlossen, das an das Gehäuse 25 für den Schlitten 24 unter Bildung eines Spalts 58 angeschlossen ist. Beide Gehäuse 25 und 57 sind über Schraubbolzen 59 mit dem Maschinengestell 2 verschraubt, wie die Fig. 5 und 6 verdeutlichen. Beide Gehäuse 25 und 57 sind durch eine Moosgummi-Rundschnur 60 an den zueinander gekehrten Flächen der beiden Gehäuse gegeneinander abgedichtet. Die Rundschnur 60 ist in eine Nut 61 in einer der Gehäuseflächen eingelegt. Die beiden Gehäuse 25 und 57 sind mittels der insbesondere aus Fig. 2 ersichtlichen Schrauben 62 miteinander verbunden.

Die beiden Gehäuse 25 und 57 können durch die Schrauben 62 fest aufeinandergezogen werden, jedoch würde dann der gewünschte Spalt 58 nicht gebildet werden. Vorzugsweise wird daher bei der Montage durch Zwischenlegen einer Distanzfolie zunächst ein geringer Spalt zwischen den zueinander gekehrten Gehäuseflächen eingestellt. Nach der Montage der Fast-Tool-Anordnung 19 und des Tauchspulenantriebs 34 auf dem Maschinengestell 2 werden die Schrauben 62 gelöst und die Distanzfolie wieder entfernt. Auf diese Weise verbleibt zwischen den beiden Gehäusen der enge Spalt 58. Dieser bewirkt, daß durch die Bewegungen des Tauchspulenantriebs 34 eingeleitete Schwingungen nicht unmittelbar auf das Gehäuse 25 der Fast-Tool-Anordnung 19 und das darin befindliche Meßsystem übertragen werden, sondern über die Masse des Maschinengestells 2 absorbiert werden.

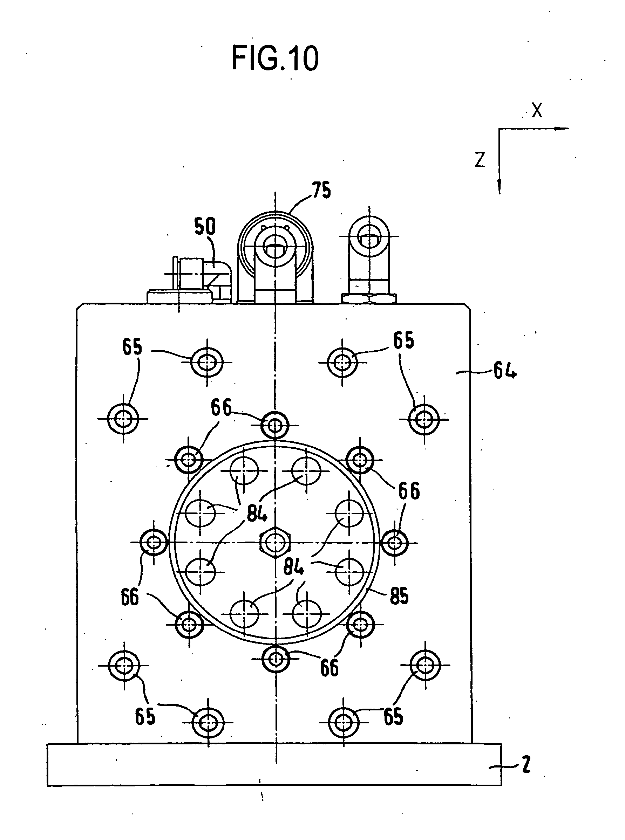

Der Permanentmagnet 63 des Tauchspulenantriebs 34 ist mit dem Antriebsgehäuse 57 zusammen mit einer das Antriebsgehäuse 57 schließenden rückseitigen Platte 64 mittels Schrauben 65 und 66 fest verbunden, wie Fig. 5 in Verbindung mit Fig. 10 verdeutlicht. Der Permanentmagnet 63 besitzt einen mit seiner Mittelachse 67 konzentrischen Ringraum 68, welcher die Tauchspule 69 mit Radialspiel und axial darin beweglich aufnimmt.

Der Schlitten 24 ist mit der Tauchspule unter Zwischenlage einer Isolatorplatte 70 verschraubt. Die dafür vorgesehenen Titanschrauben 71 sind in Stopfen 72 eingeschraubt, die in den Profilsteg 37 des Schlittens 24 eingeklebt sind. Die Isolatorplatte 70 besteht aus einem thermisch isolierenden, wärmebeständigen, form- und maßstabilen Kunststoff (KETRON^{®} PEEK-HPV, Markenname der Herstellerfirma Quadrant Engineering Plastic Products). In der Isolatorplatte 70 sind Nuten 73 zur Aufnahme der aus dem Antriebsgehäuse 57 nach außen geführten Anschlußkabel (nicht dargestellt) der Tauchspule 69 vorgesehen. Diese Kabel werden in einer Schlaufe, welche die Bewegung des Schlittens 24 nicht behindert, über eine obere Öffnung 74 des Antriebsgehäuses 57 mittels einer Steckerarmatur 75 aus dem Antriebsgehäuse 57 herausgeführt (Fig. 5).

Zwischen der äußeren Mantelfläche 76 des Permanentmagneten 63 des Tauchspulenantriebs 34 und dem den Permanentmagneten umschließenden Antriebsgehäuse 57 ist eine abgedichtete und für den Durchfluß von Luft oder einer Kühlflüssigkeit ausgebildete Ringkammer 77 vorgesehen. Die Zu- und Abführung des Kühlmediums erfolgt über L-Verschraubungen 78 bzw. 79, wie aus Fig. 5 hervorgeht.

Die Tauchspule 69 des Tauchspulenantriebs 34 ist luftgekühlt. Für den Zutritt der Kühlluft ist ein Lufteintrittsstutzen 80 am Antriebsgehäuse 57 vorgesehen, der dem die Tauchspule 69 umgebenden Ringraum 81 über eine Öffnung 82, die in Fig. 5 dargestellt ist, Kühlluft zuführt. Die Kühlluft gelangt in den Eintauch-Ringraum 68 und tritt über Kanäle in einen Sammelringraum 83 in der rückseitigen Platte 64 ein und aus diesem über Entlüftungsbohrungen 84 aus, die in Fig. 10 dargestellt sind. Die Entlüftungsbohrungen 84 befinden sich innerhalb eines äußeren Anschlußstutzen 85, der für die Anbringung eines Abluftschlauches (nicht dargestellt) vorgesehen ist. Zusammen mit der Kühlluft wird über den beschriebenen Luftweg auch die Abluft der Luftlagerelemente 26 bis 31 und die von der Tauchspule 69 verdrängte Luft nach außen geführt.

Für den Schlitten 24 und die damit verbundene Tauchspule 69 sind wegbegrenzende Anschläge gehäusefest vorgesehen, die nachfolgend anhand der Fig. 5 und 3 beschrieben werden. Das in der einen Bewegungsrichtung wirksame Anschlagelement ist ein durch den Permanentmagneten 63 über eine entsprechende Bohrung 86 konzentrisch hindurchgeführter Anschlagstab 87, dessen Anschlagfläche 88 dem inneren Ende der Tauchspule 69 zugekehrt ist. Das äußere Ende des Anschlagstabes 87 ist durch die rückseitige Platte 64 nach außen geführt und mit einer aufgeschraubten selbstsichernden Mutter 90 versehen. Eine anschlagdämpfende Abstützung des Anschlagstabs 87 an der rückseitigen Platte 64 erfolgt über einen an dem Anschlagstab 87 befestigten Ringflansch 91, der einem Tellerfederpaket 92 anliegt, welches an der rückseitigen Platte 64 abgestützt ist. Die in der anderen Bewegungsrichtung wirksamen Anschlagelemente sind zwei Pufferelemente 93 aus elastomerem Material (Schwing-metall^{®}-Elemente, Markenname der Firma Continental-Gummi-Werke AG), die an dem Gehäuse 25 befestigt sind und der benachbarten Stirnfläche der Tauchspule 69 zugekehrt sind.

Bei einer Fast-Tool-Anordnung, insbesondere für Drehmaschinen zur Bearbeitung von optischen Werkstücken, mit einem Schlitten, der für linear reziprozierende Bewegungen in einem Gehäuse an gehäusefesten Lagerelementen geführt ist, der an seinem äußeren Ende einen Halter für ein Werkzeug oder Werkstück trägt und an seinem inneren Ende mit einem Tauchspulenantrieb wirkverbunden ist, ist vorgesehen, daß der Schlitten den Querschnitt eines T-Profils mit planparallelen Flansch- und Stegflächen besitzt, wobei die Lagerelemente paarweise an beiden Seiten des Profilstegs und des Profilflansches angeordnet sind.

### BEZUGSZAHLENLISTE

- 1: Maschine
- 2: Maschinengestell
- 3: Bearbeitungsbereich
- 4: Führungsschienen
- 5: Montagefläche
- 6: x-Schlitten
- 7: Führungsschienen
- 8: Montagefläche
- 9: y-Schlitten
- 10: Montagefläche
- 11: Werkstückspindel
- 12: Elektromotor
- 13: Brillenglas
- 14: Rezeptfläche
- 15: Fräseinheit
- 16: Elektromotor
- 17: Frässpindel
- 18: Fräswerkzeug
- 19: Fast-Tool-Anordnung
- 20: Fast-Tool-Anordnung
- 21: Drehmeißel
- 22: Drehmeißel
- 23: Montagefläche
- 24: Schlitten
- 25: Gehäuse
- 26: Luftlagerelement
- 27: Luftlagerelement
- 28: Luftlagerelement
- 29: Luftlagerelement
- 30: Luftlagerelement
- 31: Luftlagerelement
- 32: Vorsprung
- 33: Halter
- 34: Tauchspulenantrieb
- 35: Profilflansch
- 36: Flanschflächen
- 37: Profilsteg
- 38: Stegflächen
- 39: Schrauben
- 40: Längsbohrung
- 41: Längsbohrung
- 42: Längsbohrung
- 43: Querbohrungen
- 44: Ausnehmung
- 45: Oberteil
- 46: Unterteil
- 47: Stirnplatte
- 48: Öffnung
- 49: Schrauben
- 50: Anschlußstutzen
- 51: Glasmaßstab
- 52: Lesekopf
- 53: Lesekopfhalter
- 54: Gehäuseausnehmung
- 55: Abdeckung
- 56: Öffnung
- 57: Antriebsgehäuse
- 58: Spalt
- 59: Schraubbolzen
- 60: Moosgummi-Rundschnur
- 61: Nut
- 62: Schrauben
- 63: Permanentmagnet
- 64: rückseitige Platte
- 65: Schrauben
- 66: Schrauben
- 67: Mittelachse
- 68: Ringraum
- 69: Tauchspule
- 70: Isolatorplatte
- 71: Schrauben
- 72: Stopfen
- 73: Nuten
- 74: Öffnung
- 75: Steckerarmatur
- 76: Mantelfläche
- 77: Ringkammer
- 78: L-Verschraubung
- 79: L-Verschraubung
- 80: Lufteintrittsstutzen
- 81: Ringraum
- 82: Öffnung
- 83: Sammelringraum
- 84: Entlüftungsbohrungen
- 85: Anschlußstutzen
- 86: Bohrung
- 87: Anschlagstab
- 88: Anschlagfläche
- 90: selbstsichernde Mutter
- 91: Ringflansch
- 92: Tellerfederpaket
- 93: Pufferelement

## Patentansprüche

1. Fast-Tool-Anordnung, insbesondere für Drehmaschinen zur Bearbeitung von optischen Werkstücken, mit einem Schlitten (24), der für linear reziprozierende Bewegungen in einem Gehäuse (25) an gehäusefesten Lagerelementen (26 bis 31) geführt ist, der an seinem äußeren Ende einen Halter (33) für ein Werkzeug (21) oder Werkstück trägt und an seinem inneren Ende mit einem Tauchspulenantrieb (34) wirkverbunden ist, **dadurch gekennzeichnet, daß** der Schlitten (24) den Querschnitt eines T-Profils mit planparallelen Flansch- und Stegflächen (36, 38) besitzt, wobei die Lagerelemente (26 bis 31) paarweise an beiden Seiten des Profilsteges (37) und des Profilflansches (35) angeordnet sind.

2. Anordnung nach Anspruch 1, **dadurch gekennzeichnet, daß** das Gehäuse (25) eine sich über seine Länge erstreckende T-förmige Ausnehmung (44) zur Aufnahme des Schlittens (24) und der Lagerelemente (26 bis 31) aufweist.

3. Anordnung nach Anspruch 1 oder 2, **dadurch gekennzeichnet, daß** das Gehäuse (25) aus einem Oberteil (45) mit darin angebrachter T-förmiger Ausnehmung (44) und einem plattenförmigen Unterteil (46) zweiteilig ausgebildet ist, wobei das Unterteil (46) die T-förmige Ausnehmung (44) an deren Flanschseite schließt.

4. Anordnung nach einem der Ansprüche 1 bis 3, **dadurch gekennzeichnet, daß** der Schlitten (24) aus zwei planparallelen Platten zusammengesetzt ist, die zueinander senkrecht in T-Form angeordnet sind.

5. Anordnung nach Anspruch 4, **dadurch gekennzeichnet, daß** die beiden Platten des Schlittens (24) durch Schrauben (39) miteinander verbunden sind.

6. Anordnung nach einem der Ansprüche 1 bis 5, **dadurch gekennzeichnet, daß** die den Profilsteg (37) bildende Platte mit im wesentlichen über ihre Länge durchgehenden zylindrischen Längsbohrungen (40, 41, 42) und die den Profilflansch (35) bildende Platte mit über ihre Breite durchgehenden Querbohrungen (43) versehen ist.

7. Anordnung nach den Ansprüchen 5 und 6, **dadurch gekennzeichnet, daß** die Schrauben (39) jeweils neben den Querbohrungen (43) durch die Platte geführt sind.

8. Anordnung nach einem der Ansprüche 1 bis 7, **dadurch gekennzeichnet, daß** der Tauchspulenantrieb (34) von einem Antriebsgehäuse (57) umschlossen ist, das an das Gehäuse (25) für den Schlitten (24) unter Bildung eines Spalts (58) angeschlossen ist, wobei beide Gehäuse (25, 57) mit dem Maschinengestell (2) der Drehmaschine verschraubt sind.

9. Anordnung nach einem der Ansprüche 1 bis 8, **dadurch gekennzeichnet, daß** zwischen der äußeren Mantelfläche (76) des Permanentmagneten (63) des Tauchspulenantriebs (34) und dem den Permanentmagneten (63) umschließenden Antriebsgehäuse (57) eine abgedichtete und für den Durchfluß eines Kühlmediums ausgebildete Ringkammer (77) vorgesehen ist.

10. Anordnung nach einem der Ansprüche 1 bis 9, **dadurch gekennzeichnet, daß** die Lagerelemente Luftlagerelemente (26 bis 31) sind und daß die Tauchspule (69) des Tauchspulenantriebs (34) luftgekühlt ist, wobei die Kühlluft vorzugsweise zusammen mit der Abluft der Luftlagerelemente (26 bis 31) und der von der Tauchspule (69) verdrängten Luft durch den Eintauch-Ringraum (68) der Tauchspule (69) geleitet und über eine das Antriebsgehäuse (57) am äußeren Ende schließende rückseitige Platte (64) nach außen geführt ist.

11. Anordnung nach einem der Ansprüche 1 bis 10, **dadurch gekennzeichnet, daß** der Schlitten (24) mit der Tauchspule (69) unter Zwischenlage einer Isolatorplatte (70) verschraubt ist.

12. Anordnung nach Anspruch 11, **dadurch gekennzeichnet, daß** in der Isolatorplatte (70) Nuten (73) zur Aufnahme der aus dem Antriebsgehäuse (57) nach außen geführten Anschlußkabel der Tauchspule (69) vorgesehen sind.

13. Anordnung nach einem der Ansprüche 1 bis 12, **dadurch gekennzeichnet, daß** wegbegrenzende Anschlagelemente für den Schlitten (24) und die damit fest verbundene Tauchspule (69) gehäusefest vorgesehen sind.

14. Anordnung nach Anspruch 13, **dadurch gekennzeichnet, daß** das in der einen Bewegungsrichtung wirksame Anschlagelement ein durch den Permanentmagneten (63) konzentrisch hindurchgeführter und über diesen vorstehender Anschlagstab (87) ist, dessen Anschlagfläche (88) dem inneren Ende der Tauchspule (69) zugekehrt ist und dessen äußeres Ende mit der rückseitigen Platte (64) des Antriebsgehäuses (57) über dämpfende Federelemente (92) verbunden ist.

15. Anordnung nach Anspruch 13 oder 14, **dadurch gekennzeichnet, daß** die in der anderen Bewegungsrichtung wirksamen Anschlagelemente durch Pufferelemente (93) aus elastomeren Material gebildet sind, die an dem Gehäuse (25) befestigt und der benachbarten Stirnfläche der Tauchspule (69) zugekehrt sind.

## Claims

1. Fast tool arrangement in particular for lathes for machining of optical workpieces, with a carriage (24) which for linear reciprocating movements is guided in a housing (25) on bearing elements (26 to 31) stationary in relation to the housing, and which at its outer end carries a holder (33) for a tool (21) or workpiece and at its inner end is actively connected with a moving coil drive (34), **characterized in that** the carriage (24) has the cross-section of a T-profile with plane-parallel flange and web faces (36, 38), wherein the bearing elements (26 to 31) are arranged in pairs on both sides of the profile web (37) and profile flange (35).

2. Arrangement according to claim 1, **characterized in that** the housing (25) has a T-shaped recess (44) extending over its length to receive the carriage (24) and the bearing elements (26 to 31).

3. Arrangement according to claim 1 or 2, **characterized in that** the housing (25) is formed of two pieces with an upper part (45) with T-shaped recess arranged therein (44) and a plate-shaped lower part (46), wherein the lower part (46) closes the T-shaped recess (44) on its flange side.

4. Arrangement according to any of claims 1 to 3, **characterized in that** the carriage (24) comprises two plane-parallel plates which are arranged perpendicular to each other in a T-form.

5. Arrangement according to claim 4, **characterized in that** the two plates of the carriage (24) are screwed together by bolts (39).

6. Arrangement according to any of claims 1 to 5, **characterized in that** the plate forming the profile web (37) is provided with cylindrical longitudinal bores (40, 41, 42) substantially over its entire length, and the plate forming the profile flange (35) is provided with transverse bores (43) over its entire width.

7. Arrangement according to claims 5 and 6, **characterized in that** the bolts (39) are each guided through the plate next to the transverse bores (43).

8. Arrangement according to any of claims 1 to 7, **characterized in that** the moving coil drive (34) is surrounded by a drive housing (57) that is connected to the housing (25) for the carriage (24) forming a gap (58), wherein the two housings (25, 27) are bolted to the machine frame (2) of the lathe.

9. Arrangement according to any of claims 1 to 8, **characterized in that** between the outer casing surface (76) of the permanent magnet (63) of the moving coil drive (34) and the drive housing (57) surrounding the permanent magnet (63) is provided a sealed ring chamber (77) formed for the flow of a coolant.

10. Arrangement according to any of claims 1 to 9, **characterized in that** the bearing elements are pneumatic bearing elements (26 to 31), and the moving coil (69) of the moving coil drive (34) is air-cooled, wherein the cooling air is guided to the outside, preferably together with the exhaust air from the pneumatic bearing elements (26 to 31) and the air displaced by the moving coil (69), through the immersion ring chamber (68) of the moving coil (69) and via a back plate (64) closing the drive housing (57) on its outer end.

11. Arrangement according to any of claims 1 to 10, **characterized in that** the carriage (24) is bolted to the moving coil (69) with the interposition of an isolator plate (70).

12. Arrangement according to claim 11, **characterized in that** in the isolator plate (70) are provided grooves (73) to receive the connecting cables of the moving coil (69) guided to the outside from the drive housing (57).

13. Arrangement according to any of claims 1 to 12, **characterized in that** travel-limiting stop elements that are stationary in relation to the housing are provided for the carriage (24) and the moving coil (69) firmly connected thereto.

14. Arrangement according to claim 13, **characterized in that** the stop element effective in the one movement direction is a stop rod (87) guided concentrically through and protruding beyond the permanent magnet (63), the stop surface (88) of which faces the inner end of the moving coil (69), and the outer end of which is connected with the back plate (64) of the drive housing (57) via damping spring elements (92).

15. Arrangement according to claim 13 or 14, **characterized in that** the stop elements effective in the other movement direction are formed by buffer elements (93) of elastomer material that are attached to the housing (25) and face the adjacent surface of the moving coil (69).

## Revendications

1. Agencement d'outil rapide dit agencement fast-tool, notamment pour des machines de tournage ou tours destinés à l'usinage de pièces d'oeuvre optiques, comprenant un chariot (24) qui est guidé dans un carter (25) par des éléments de palier (26 à 31) fixes avec le carter, dans l'optique de mouvements linéaires réciproques, qui porte, à son extrémité extérieure, un support (33) pour un outil (21) ou une pièce d'oeuvre, et qui, à son extrémité intérieure, est relié de manière interactive à un système d'entraînement (34) à bobine mobile plongeante, **caractérisé en ce que** le chariot (24) possède une section transversale d'un profilé en T avec des surfaces planes parallèles d'aile et d'âme (36, 38), les éléments de palier (26 à 31) étant agencés par paires sur les deux côtés de l'âme de profilé (37) et de l'aile de profilé (35).

2. Agencement selon la revendication 1, **caractérisé en ce que** le carter (25) présente un évidement (44) en forme de T, qui s'étend sur la longueur du carter et est destiné à recevoir le chariot (24) et les éléments de palier (26 à 31).

3. Agencement selon la revendication 1 ou 2, **caractérisé en ce que** le carter (25) est réalisé en deux parties, à savoir une partie supérieure (45) dans laquelle est réalisé l'évidement en forme de T (44), et une partie inférieure (46) en forme de plaque, la partie inférieure (46) fermant l'évidement en forme de T (44) sur son côté de l'aile de profilé

4. Agencement selon l'une des revendications 1 à 3, **caractérisé en ce que** le chariot (24) est composé de l'assemblage de deux plaques planes à faces parallèles, qui sont agencées perpendiculairement l'une par rapport à l'autre selon une forme de T.

5. Agencement selon la revendication 4, **caractérisé en ce que** les deux plaques du chariot (24) sont assemblées l'une à l'autre par des vis (39).

6. Agencement selon l'une des revendications 1 à 5, **caractérisé en ce que** la plaque formant l'âme de profilé (37) est dotée d'alésages longitudinaux cylindriques (40, 41, 42) s'étendant sensiblement de manière continue sur sa longueur, et la plaque formant l'aile de profilé (35) est pourvue d'alésages transversaux (43) continus qui la traversent sur sa largeur.

7. Agencement selon les revendications 5 et 6, **caractérisé en ce que** les vis (39) sont menées à travers la plaque, respectivement entre les alésages transversaux (43).

8. Agencement selon l'une des revendications 1 à 7, **caractérisé en ce que** le système d'entraînement (34) à bobine mobile plongeante est entouré par un carter d'entraînement (57), qui est raccordé au carter (25) pour le chariot (24) en formant un interstice (58), les deux carters (25, 57) étant vissés au bâti de machine (2) du tour ou de la machine de tournage.

9. Agencement selon l'une des revendications 1 à 8, **caractérisé en ce qu'**entre la surface d'enveloppe extérieure (76) de l'aimant permanent (63) du système d'entraînement (34) à bobine mobile plongeante et le carter d'entraînement (57) entourant l'aimant permanent (63), il est prévu une chambre annulaire (77) étanche et conçue pour le passage d'un écoulement d'agent de refroidissement.

10. Agencement selon l'une des revendications 1 à 9, **caractérisé en ce que** les éléments de palier sont des éléments palier à air (26 à 31), et **en ce que** la bobine mobile plongeante (69) du système d'entraînement (34) à bobine mobile plongeante est refroidie par air, l'air de refroidissement, de préférence en commun avec l'air d'échappement des éléments de palier à air (26 à 31) et l'air refoulé par la bobine mobile plongeante (69), étant envoyé à travers l'espace annulaire de plongée (68) de la bobine mobile plongeante (69), et évacué vers l'extérieur par l'intermédiaire d'une plaque arrière (64) fermant le carter d'entraînement (57) à l'extrémité extérieure.

11. Agencement selon l'une des revendications 1 à 10, **caractérisé en ce que** le chariot (24) est vissé à la bobine mobile plongeante (69) avec interposition d'une plaque d'isolation (70).

12. Agencement selon la revendication 11, **caractérisé en ce que** dans la plaque d'isolation (70) sont prévues des rainures (73) destinées à recevoir les câbles de raccordement de la bobine mobile plongeante (69) sortant du carter d'entraînement (57) vers l'extérieur.

13. Agencement selon l'une des revendications 1 à 12, **caractérisé en ce que** des éléments de butée limitant le déplacement sont prévus de manière fixe avec le carter, pour le chariot (24) et la bobine mobile plongeante (69) qui y est liée de manière fixe.

14. Agencement selon la revendication 13, **caractérisé en ce que** l'élément de butée agissant dans l'une des directions de mouvement est une tige de butée (87) qui traverse concentriquement l'aimant permanent (63) et en fait saillie, et dont la surface de butée (88) est dirigée vers l'extrémité intérieure de la bobine mobile plongeante (69), et dont l'autre extrémité est reliée à la plaque arrière (64) du carter d'entraînement (57) par l'intermédiaire d'éléments de ressort (92) d'amortissement.

15. Agencement selon la revendication 13 ou 14, **caractérisé en ce que** les éléments de butée agissant dans l'autre direction de mouvement sont formés par des éléments tampons (93) en matériau élastomère, qui sont fixés au carter (25) et sont dirigés vers la surface frontale voisine de la bobine mobile plongeante (69).
